# EUROPEAN PATENT APPLICATION

(11) **EP 2 345 522 A1**
(43) Date of publication of application: **20.07.2011**
(21) Application number: 09820523.0
(22) Date of filing: 30.09.2009
(51) Int. Cl.: B29C 33/10, B29C 33/02, B29C 35/02, B29L 30/00

(54) **VULCANIZING MOLD AND VULCANIZING METHOD**

(30) Priority: 15.10.2008 JP 2008265966
(71) Applicant: Bridgestone Corporation, Tokyo 104-8340 (JP)
(72) Inventor: GOTO, Naoyuki, Kodaira-shi Tokyo 187-8531 (JP)
(74) Representative: Oxley, Robin John George
(86) International application number: PCT/JP2009/067079
(87) International publication number: WO 2010/044345

(57) **Abstract**

Gas is effectively discharged between a tire tread and a tread mold 13 while occurrence of spews and burrs is prevented.

[Solving means]

A discharging groove 34 that allows only gas to pass through is formed at one side-end surfaces 17a of each of the segments 16 in the longitudinal direction, one end of the discharging groove being open to the front surface 20, and the other end of the discharging groove being open to a rear surface 35 and a side surface 35. Therefore, the discharging groove 34 serves as a discharging passage 37 during vulcanization, whereby it is possible to effectively discharge the gas remaining between a tire tread and the segments 16 to the side surface 36 side. since the discharging groove 34 allows only the gas to pass through, unvulcanized rubber does not enter the discharging groove 34, whereby it is possible to prevent the occurrence of spews and burrs.

## Description

### TECHNICAL FIELD

The present invention relates to a vulcanizing mold and a vulcanizing method in which a tire tread is vulcanized by using a tread mold formed by plural segments each having a molding surface.

### RELATED ART

Conventionally, a vulcanizing mold and a vulcanizing method as described, for example, in Patent Document 1 below have been known.

### RELATED ART DOCUMENT

### PATENT DOCUMENT

Patent Document 1: Japanese Patent Application Laid-open No. 11-165319

In this technique, a tread mold is configured such that plural arcuate segments each having, on a front surface thereof, a molding surface for shaping a ground-contacting surface of a tire tread are aligned in the circumferential direction in a manner that end faces of the arcuate segments adjacent in the circumferential direction (longitudinal direction) of the segments abut against each other; plural through vent holes are formed in the front surface of each of the segments in a manner that extends to a rear surface of the segment; and, gas existing between the tire tread and the tread mold is discharged through the vent hole to the rear surface side during vulcanization.

### DISCLOSURE OF THE INVENTION

### PROBLEMS TO BE SOLVED BY THE INVENTION

However, with the conventional vulcanizing mold and vulcanizing method as described above, since unvulcanized rubber constituting the tire tread enters the vent hole during vulcanization, a large number of spews (needle-like protrusions) are formed on the ground-contacting surface of the tire tread after the vulcanization is completed, whereby appearance thereof deteriorates. To solve the problem described above, the spews are cut by using a trimming device. However, in this case, a special device is necessary and unwanted time and workforce are required for the trimming operation.

An object of the present invention is to provide a vulcanizing mold and a vulcanizing method capable of effectively discharging the gas from the tire tread and the tread mold while preventing the occurrence of the spews.

### MEANS FOR SOLVING THE PROBLEM

The above-described object can be achieved firstly by a vulcanizing mold having a tread mold in which a plurality of segments each having, on a front surface thereof, a molding surface for shaping a ground-contacting surface of a tire tread during vulcanization are aligned in a manner that end surfaces of the segments in the longitudinal direction abut against each other, wherein a discharging groove that allows only a gas to pass through is formed at at least one of the end surfaces of each of the segments in the longitudinal direction, one end of the discharging groove being open to the front surface, and the other end of the discharging groove being open to a side surface.

The above-described object can be achieved secondly by a vulcanizing method, wherein, when a tire tread is vulcanized by using a vulcanizing mold having a tread mold in which a plurality of segments each having, on a front surface thereof, a molding surface for shaping a ground-contacting surface of the tire tread are aligned in a manner that end surfaces of the segments in the longitudinal direction abut against each other, a discharging groove that allows only a gas to pass through is formed at at least one of the respective end surfaces of each of the segments in the longitudinal direction, one end of the discharging groove being open to the front surface, and the other end of the discharging groove being open to a side surface, so that a gas existing between the tire tread and the tread mold can be discharged through the discharging groove.

### EFFECT OF THE INVENTION

According to the present invention, by forming a discharging groove that allows only gas to pass through at at least one of the respective end surfaces of each of the segments in the longitudinal direction, one end of the discharging groove being open to the front surface, and the other end of the discharging groove being open to the side surface, it is possible to effectively discharge the gas remaining between the tire tread and the tread mold through the discharging groove to the side surface side during vulcanization of the tire tread in a state where the tread mold is configured such that the end surfaces of the segments in the longitudinal direction abut against each other. Since the discharging groove allows only the gas to pass through, the unvulcanized rubber constituting the tire tread does not enter the discharging groove, and hence, it is possible to prevent the occurrence of the spews and burrs. The reason that the other end side of the discharging groove is open to the side surface side of the vulcanizing mold is that, when a precure tread is vulcanized, high pressure is generally applied in a space on the rear surface side of the mold for the purpose of suppressing the occurrence of the inner bubbles resulting from the vulcanization. Therefore, in order to discharge the remaining gas, it is necessary to lead the remaining gas to the side surface side where the pressure is atmospheric pressure. However, when the high pressure is not applied to the space on the rear surface side of the mold, it is possible to further increase the discharging efficiency by making the other end of the discharging groove open to the rear surface side as well as the side surface side of the vulcanizing mold.

If the main frame is provided on the front surface of each of the segments, it is difficult for the gas remaining between the tire tread and the tread mold to move over the main frame. However, it is possible to reliably discharge the gas remaining as described above, by making the one end of the discharging groove open at the respective sides of each of the main frame as described in claim 2. Further, by employing the configuration as described in claim 4, the area in which the gas passes through (cross-sectional area of the discharging groove) increases toward the downstream side, which makes it possible for the gas to smoothly pass through.

Further, by employing the configuration as described in claim 5, even if the gas remains at plural portions, it is possible to reliably and easily discharge the gas remaining at all of the plural portions. Yet further, if the longitudinal length of each of the segments exceeds 400 mm, the gas travels longer distance, and although within the allowable range, the gas may remain between the tire tread and the tread mold after the vulcanization is complete. However, by employing the configuration as described in claim 6, it is possible to completely remove the remaining gas described above.

Yet further, if the main frame and the sub frame are provided to each of the segments and the height G of the sub frame exceeds 50% of the height H of the main frame, the gas cannot sufficiently move over the sub frame, and although within the allowable range, the gas may remain between the tire tread and the tread mold after the vulcanization is complete. However, by employing the configuration as described in claim 6, it is possible to completely remove the remaining gas described above. Yet further, by employing the configuration as described in claim 7, the gas discharged to the rear surface side of each of the segments gathers at the cut portion, whereby the gas can be easily discharged to the outside.

### BRIEF DESCRIPTION OF THE DRAWINGS

FIG. 1 is a partially cut-away plan view illustrating an embodiment 1 according to the present invention.
FIG. 2 is a sectional view taken along the line I-I in FIG. 1.
FIG. 3 is a perspective view illustrating one segment.
FIG. 4 is a diagram taken along the line II-II in FIG. 3.
FIG. 5 is a sectional view taken along the line III-III in FIG. 4.
FIG. 6 is a diagram illustrating a modification of the embodiment 1, as viewed from a direction corresponding to FIG. 4.
FIG. 7 is a diagram taken along the line IV-IV in FIG. 6.
FIG. 8 is a sectional front view illustrating an embodiment 2 according to the present invention.

### BEST MODE FOR CARRYING OUT THE INVENTION

Hereinbelow, an embodiment 1 according to the present invention will be described with reference to the drawings.

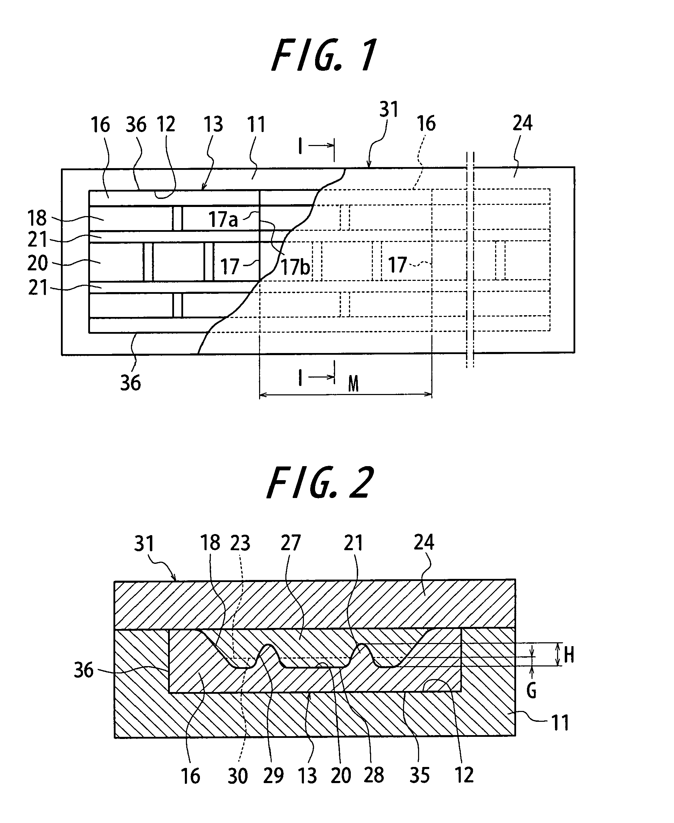

In FIGS. 1 to 3, the reference numeral 11 represents a mold case extending linearly. On the upper surface of the mold case 11, there is formed an accommodation groove 12 having a certain depth and extending in the longitudinal direction. The reference numeral 13 represents a tread mold that is in complementary relationship with the accommodation groove 12 of the mold case 11. The tread mold 13 is accommodated in the accommodation groove 12, and the upper surface of the mold case 11 and the upper surface of the tread mold 13 are coplanar with each other.

The reference numeral 16 represents a rectangular plate-shaped segment. The tread mold 13 is configured such that plural segments 16 are aligned in a longitudinal direction in a manner that adjacent end surfaces 17 in the longitudinal direction of each of the segment 16 abut against each other.
The reference numeral 18 represents a molding recess formed on the upper surface of each of the segments 16. The molding recess 18 extends in the longitudinal direction, and both ends of the molding recess 18 are open at the end surfaces 17 in the longitudinal direction. It should be noted that, in the present application, the longitudinal direction represents a direction in which the tread mold 13 extends, and the longitudinal direction of the segment 16 is defined as a direction in which the molding recess 18 extends, even if a length of the segment 16 in a direction in which the segments 16 are aligned is smaller than a length of the segment 16 in a direction perpendicular to said parallel arrangement direction.

On a front surface 20 of the molding recess 18, at least one main frame 21, two main frames 21 in this embodiment, is formed so as to protrude toward the upper direction. The main frames 21 are arranged apart from each other in the width direction of the segment 16, and continuously extend in the longitudinal direction. The main frames 21 are arranged in the same shape at the same position in each of the segments 16. Therefore, the main frames 21 of all the segments 16 continue on the tread mold 13.

Further, on the front surface 20 of the molding recess 18, at the respective sides of each of the main frame 21 on the front surface 20 in this embodiment, there is formed at least one sub frame 23 that extends in a manner slanting with respect to the main frame 21, perpendicular to the main frame 21 in this embodiment. The sub frame 23 protrudes toward the upper direction, and at least one side end of the sub frame 23 continues to the main frame 21. The reference numeral 24 represents a plate-like upper lid having a shape substantially the same as that of the mold case 11. By placing the upper lid 24 on the mold case 11 and the tread mold 13, the opening portion on the upper end of the molding recess 18 is closed to form an enclosed vulcanization space.

Then, a plate-like tire tread 27 formed by unvulcanized rubber is placed in the molding recess 18; the molding recess 18 is closed by the upper lid 24 to accommodate the tire tread 27 in the vulcanization space; the tire tread 27 is subjected to vulcanization; the main frame 21 and the sub frame 23 are pressed against the tire tread; thereby, on a ground-contacting surface 28 of the tire tread 27, forming a main groove 29 extending continuously in the longitudinal direction and a lateral groove 30 perpendicular to the main groove 29. As described above, the front surface 20 of the segment 16 (tread mold 13) constitutes a molding surface for shaping the ground-contacting surface 28 of the tire tread 27. Further, the tread mold 13 and the upper lid 24 described above constitute a vulcanizing mold 31 for vulcanizing the tire tread 27 as a whole.

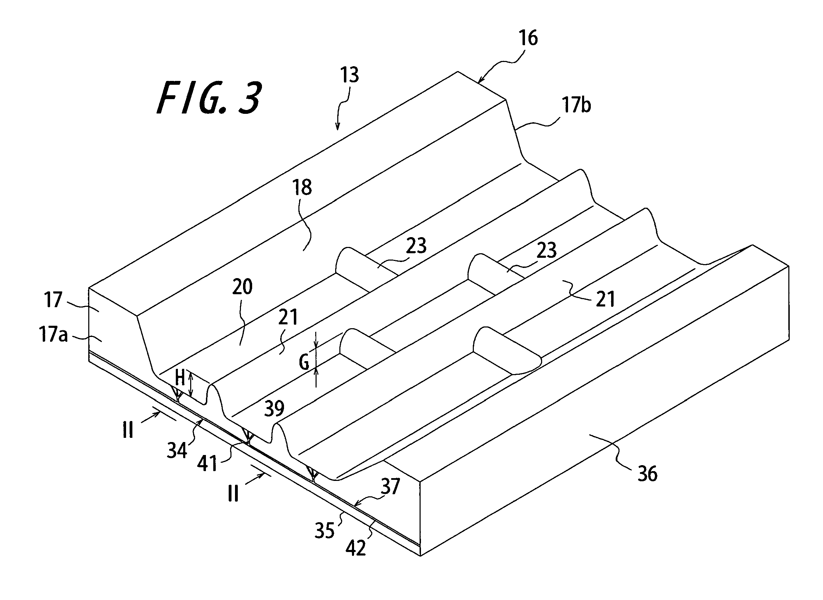

In FIG. 3 to FIG. 5, at one side-end surface 17a of each of the segments 16 in the longitudinal direction, there are formed plural discharging grooves 34 each having a rectangular cross section. One end (upper end) of each of the discharging grooves 34 is open to the front surface 20 of the segment 16, whereas the other end thereof is bifurcated and the respective bifurcated ends thereof are open to the respective side surfaces 36 of each of the segments 16. Further, as described above, the adjacent end surfaces 17 of the segments 16 in the longitudinal direction abut against each other, and hence, one side opening of each of the discharging grooves 34 is closed by the other side-end surface 17b in the longitudinal direction of the adjacent segment 16, thereby forming a discharging passage 37 connecting the front surface 20 and the side surface 36 of the mold case 11 and allowing gas to pass through.

It should be noted that, in the embodiment described above, the discharging grooves 34 are formed only at the one side-end surface 17a of each of the segments 16 in the longitudinal direction. However, in the present invention, it may be possible to form the discharging groove only at the other side-end surface of each of the segments in the longitudinal direction; or, to mix the segment having the discharging groove formed at the one side-end surface of each of the segments in the longitudinal direction and the segment having the discharging groove formed at the other side-end surface of each of the segments in the longitudinal direction; or to form the discharging groove at both side-end surfaces of each of the segments in the longitudinal direction, and it is only necessary to form the discharging groove at at least one of the one side-end surface or the other side-end surface of each of the segments in the longitudinal direction.

As described above, at at least one of the side-end surfaces of each of the segments 16 in the longitudinal direction, at the one side-end surface 17a in the longitudinal direction in this embodiment, there are formed plural discharging grooves 34 that allow the gas to pass through such that one end of the discharging groove 34 is open to the front surface 20 and the other end of the discharging groove 34 is open to a rear surface 35 and the side surface 36. By subjecting the tire tread 27 to vulcanization in a state where the tread mold 13 is configured such that the end surfaces 17 of the adjacent segments 16 in the longitudinal direction abut against each other, it is possible to effectively discharge the gas remaining between the ground-contacting surface 28 and the molding surface (front surface 20) of the tread mold 13, such as air and gas generated during the vulcanization, through the discharging grooves 34 (discharging passages 37) to the side surface of the segment 16.

In a case where the discharging grooves 34 are formed at one side of the end surfaces 17 in the longitudinal direction (one side-end surface 17a in the longitudinal direction), either one of the width W or depth D of each of the discharging grooves 34, the depth D in this embodiment, is set at 0.1 mm or lower, preferably, in a range of 0.02 to 0.08 mm. This makes it possible for the discharging grooves 34 (discharging passage 37) to allow only the gas to pass through, and the unvulcanized rubber constituting the tire tread 27 does not enter the discharging grooves 34 (discharging passage 37) during vulcanization described above, thereby preventing the occurrence of the spews and burrs.

It should be noted that, in a case where the discharging grooves 34 are formed at both end surfaces in the longitudinal direction (one side-end surface 17a and the other side-end surface 17b in the longitudinal direction) and the opposing discharging grooves 34 are not overlapped with each other, the width D or the depth D thereof is similarly set at 0.1 mm or lower. On the other hand, in a case where the opposing discharging grooves 34 are overlapped with each other, the depth of the discharging passage 37 becomes the total depth D of the two discharging grooves 34. In this case, the depth D of each of the discharging grooves 34 is determined such that the total value of the depths is 0.1 mm or lower. Note that the cross sectional shape of each of the discharging grooves 34 may be semi-circle or arc, in addition to the rectangular shape described above, and the depth D is set similarly to the case described above.

Further, the molding recess 18 is separated by the main frame 21 into plural areas, three areas in this embodiment, in the width direction. In this case, it is preferable that the one end of each of the discharging groove 34 is open in all of the areas described above, in other words, in areas positioned at the respective sides of each of the main frame 21. This is because it would be difficult for the gas remaining between the tread mold 13 and the tire tread 27 to move over the main frame 21 to the adjacent area if the main frame 21 were formed on the front surface 20 of each of the segments 16, and hence, there is a possibility that the gas remains there after the vulcanization is completed and may cause troubles such as bare on the ground-contacting surface 28 of the tire tread 27. However, with the configuration described above, it is possible to reliably discharge the remaining gas in any of the areas.

In this embodiment, each of the discharging grooves 34 described above includes plural narrow grooves, three narrow grooves 39 having smaller cross section in this embodiment, on one side portion near to the front surface 20, and a wide groove 40 on the other side portion opposite to the narrow grooves 39; the cross-sectional area of the wide groove 40 is larger than the total cross-sectional area of the plural narrow grooves 39; and the other ends of the plural narrow grooves 39 continue to one end of the wide groove 40.

With this configuration, it is possible to open the one ends of the narrow grooves 30 at plural positions apart from each other, whereby, even if the gas remains at plural portions, it is possible to reliably and easily discharge the gas remaining at all of the plural portions. For example, in this embodiment, the depths D of both the narrow grooves 30 and the wide groove 40 are set at 0.06 mm; the widths of the narrow grooves 30 and the wide groove 40 are set at 0.1 mm and 1.0 mm, respectively, and the length L of the narrow grooves 39 in the thickness direction are set in a range of 1 to 5 mm. Note that it is preferable that the widths W of the narrow grooves 39 are set in a range of 0.1 to 0.4 mm, and the width W of the wide groove 40 is set at 0.5 mm or more. Further, no problem occurs if the depth D of the wide groove 40 is set at 0.06 mm or more, because the narrow grooves 39 prevent the unvulcanized rubber from entering.

Further, as the discharging grooves 34 are configured by the narrow grooves 39 and the wide groove 40 as described above, the cross-sectional area of each of the discharging grooves 34 increases from the one end opening toward the other end opening. Therefore, the area where the gas passes through (cross-sectional area of the discharging grooves 34) increases toward the downstream side, whereby the gas smoothly passes through. Note that, in the present invention, the number of the narrow grooves may be set at one, or the number of the narrow grooves may vary from place to place. Further, in the present invention, it may be possible to increase at least one of width or depth of the discharging grooves continuously or stepwise from the one end opening toward the other end opening, or it may be possible to form a groove having the same cross-sectional area from the one end to the other end, and dispose a vent piece having a small through hole on the one end portion of the groove, so that the cross-sectional area of the discharging groove increases from the one end opening toward the other end opening.

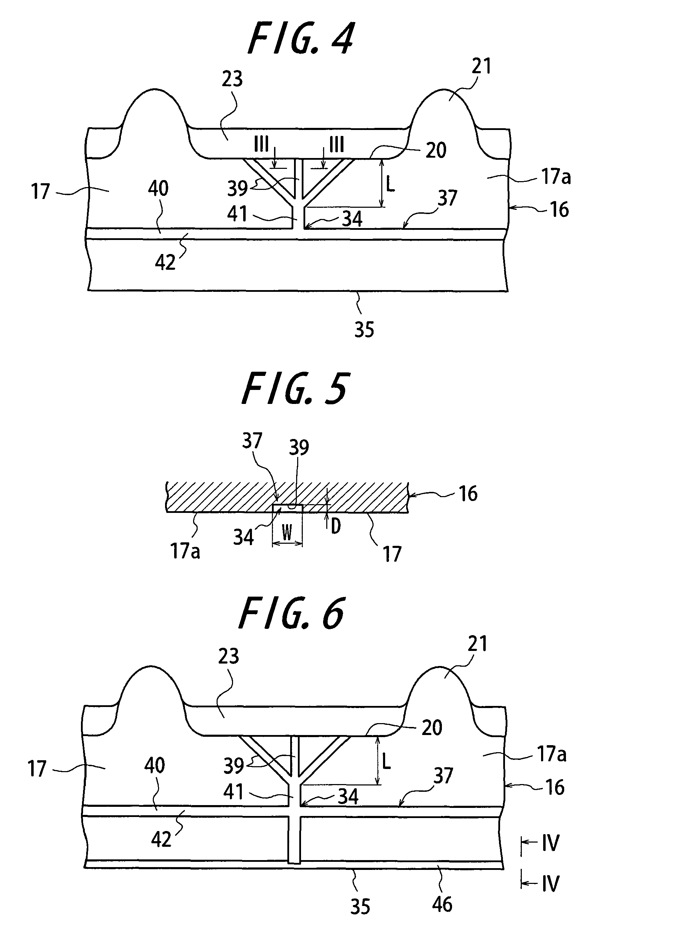

It should be noted that, in the present invention, in addition to the configuration in which the other end of the discharging groove is open to the side surface of the segment, it may be possible that the other end of the discharging groove is open to the rear surface 35 as illustrated in FIG. 6 in a case where the space on the rear surface side is not pressurized. In this case, the remaining gas is discharged to the rear surface side and the side surface side of the segment.

In FIG. 6, the wide groove 40 includes a vertically extending vertical groove 41, the upper end of which communicates with the other ends (lower ends) of the narrow grooves 39, and the lower end of which is open to the rear surface 35, and a horizontal groove 42 extending almost parallel to the rear surface 35 so as to intersect the central portion of the vertical groove 41, at least one end, both ends in this embodiment, of which horizontal groove is open to the side surface 36. As a result, the other side portion of the discharging groove 34 is separated, and one end of said other side portion is open to the rear surface 35, whereas the other end of said other side portion is open to the side surface 36.

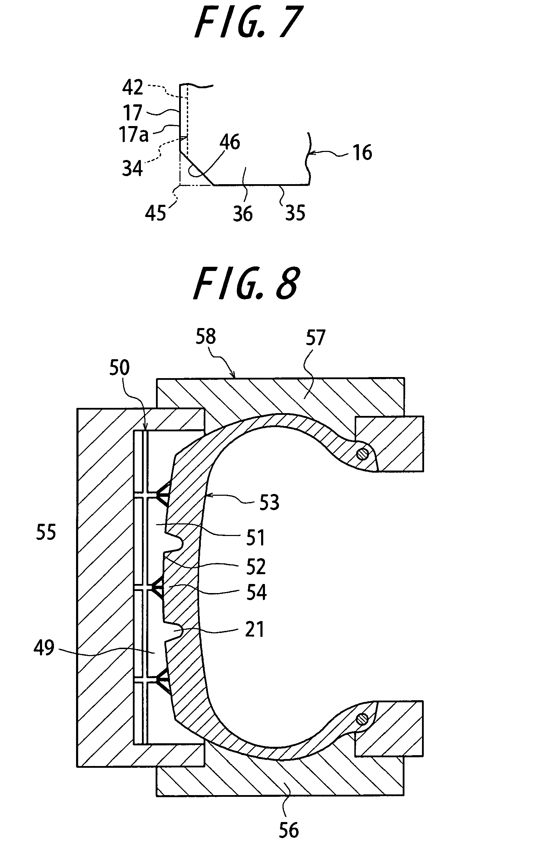

Further, in a case where the discharging grooves 34, one end of which is open to the front surface 20 and the other end of which is open, at least, to the rear surface 35, are formed on the end surface 17 of each of the segments 16 in the longitudinal direction as described above, it is preferable that a chamfer-like cut portion 46 continuously extending in the width direction of the segment 16 is formed at an edge 45 formed at a position at which the rear surface 35 of the segment 16 intersects the end surface 17 in the longitudinal direction on the side where the discharging groove 34 is formed, said end surface 17 being the one side-end surface 17a in the longitudinal direction in this embodiment, as illustrated in FIGS. 6 and 7.

This is because, by providing such a cut portion 46, the gas discharged on the rear surface 35 side of the segment 16 is gathered at the cut portion 46, which facilitates the discharging of the gas to the outside. The cut portion 46 described above is preferably a chamfer having a height and a depth of 1 mm or more and an inclination angle of 45°. Note that the gas can be further easily discharged, by forming the cut portion described above at the other side-end surface 17b in the longitudinal direction, which is in surface contact with the one side-end surface 17a in the longitudinal direction having the discharging grooves 34 formed therein, and combining the two cut portions.

When the longitudinal length M of each of the segments 16 exceeds 400 mm as illustrated in FIG. 1, the gas remaining at the center portion of the segment 16 in the longitudinal direction travels a longer distance to the discharging grooves 34 (one side-end surface 17a in the longitudinal direction), and, the small amount of gas, although within the allowable amount, may remain between the tread mold 13 and the tire tread 27 after the vulcanization is completed. Therefore, it is preferable to set the longitudinal length M of each of the segments 16 at 400 mm or lower to completely remove the remaining gas as described above.

Further, in a case where, in addition to the main frame 21, the sub frame 23 is provided to each of the segments 16 as described above, and the height G of the sub frame 23 exceeds 50% of the height H of the main frame 21, the gas cannot sufficiently travel over the sub frame 23, and the small amount of gas, although within the allowable amount, may remain between the tread mold 13 and the tire tread 27 after the vulcanization is completed. Therefore, it is preferable to set the height G of the sub frame 23 at 50% or lower of the height H of the main frame 21 to completely remove the remaining gas as described above.

Next, operations of the embodiment 1 will be described.
When the tire tread 27 made of unvulcanized rubber is vulcanized by using the vulcanizing mold 31 described above, the tire tread 27 is conveyed to the tread mold 13 whose upper portion is opened, and is placed in the molding recess 18 in a state where the ground-contacting surface 28 is arranged at the lower position. Then, by placing the upper lid 24 on the mold case 11 and the tread mold 13, the upper end opening of the molding recess 18 is closed to make the molding recess 18 the enclosed vulcanization space, and the tire tread 27 is accommodated in the vulcanization space. Then, the vulcanizing mold 31 is heated to a vulcanizing temperature while being pressed by a predetermined pressing force, thereby vulcanizing the tire tread 27 by using the vulcanizing mold 31.

The discharging grooves 34 are formed at the one side-end surface 17a of each of the segments 16 in the longitudinal direction such that the one end of the discharging groove 34 is open to the front surface 20 and the other end of the discharging groove 34 is open to the side surface 36, or to the rear surface 35 as well as the side surface 36. Therefore, by vulcanizing the tire tread 27 in a state where the tread mold 13 is configured such that the end surfaces of the adjacent segments 16 in the longitudinal direction abut against each other, it is possible to effectively discharge the gas remaining between the tire tread 27 and the tread mold 13 at least to the side surface 36 side through the discharging grooves 34 (discharging passages 37).

Further, the discharging grooves 34, especially the narrow grooves 39, allow only the gas to pass through, and block the unvulcanized rubber from entering. Therefore, the unvulcanized rubber constituting the tire tread 27 does not enter the discharging grooves 34 (discharging passages 37) during vulcanization, whereby it is possible to prevent the occurrence of the spews and burrs. When the vulcanization of the tire tread 27 is finished as described above, the vulcanized tread is removed from the vulcanizing mold 31, and is attached to a tread portion of a base tire, thereby forming a retreaded tire.

FIG. 8 is a diagram illustrating an embodiment 2 according to the present invention. In this embodiment, a ring-shaped tread mold 50 is formed such that plural arcuate segments 51 that can radially move in synchronization with each other are arranged in the longitudinal direction (circumferential direction). A molding surface for shaping a tire tread 54 of an unvulcanized tire 53 during vulcanization is formed on a front surface 52 of each of the segments 51, and, discharging grooves 55 similar to those described above are formed at at least one of end surfaces 49 of each of the segments 51 in the longitudinal direction (end surfaces in the circumferential direction). Further, in this embodiment, a vulcanizing mold 58 for vulcanizing the unvulcanized tire 53 is formed by the tread mold 50, a lower mold 56 and an upper mold 57. Note that other configurations and operations thereof are same as those of the embodiment 1.

### EXAMPLE 1

Next, a test example will be described. In this test, there are prepared a conventional mold having a tread mold formed by plural segments having vent holes formed therein, and example molds 1-4 each having a tread mold formed by plural segments having discharging grooves at one side-end surface in the longitudinal direction. The shapes of the conventional mold and the example molds are the same as those described with reference to FIG. 1 through FIG. 5 of the embodiment 1.

The longitudinal lengths M of each of the segments are 400 mm in the example molds 1, 2 and 3, 500 mm in the conventional mold and the example mold 4, and 300 mm in the example mold 5. Values obtained by dividing the height G of a sub frame by the height G of a main frame are 50% in example molds 1, 2, 3 and 4, 80% in the conventional mold, and 70% in the example mold 5. Further, as for a narrow groove of each of the discharging grooves, the number, the width W and the length L in the thickness direction are: 3, 0.1 mm and 5 mm in the example mold 1; 1, 0.1 mm and 5 mm in the example molds 2 and 3; 3, 0.4 mm and 5mm in the example mold 4; and 3, 0.4 mm and 1 mm in the example mold 5, respectively.

Next, plate-like tire treads made of unvulcanized rubber are vulcanized by using the conventional mold and the example molds 1-5 as described above, and ground-contacting surfaces of vulcanized treads are inspected after the vulcanization. As a result, no defect due to the remaining gas is found in the conventional mold and the example molds 1, 2 and 3; and, a small amount of bare, although within the allowable amount, occurs due to the slightly remaining gas, which results from the longer longitudinal length M of each of the segments in the example mold 4, and the larger value of G/H in the example mold 5.

### INDUSTRIAL APPLICABILITY

The present invention is applicable to an industrial field in which a tire tread is vulcanized by using a tread mold formed by plural segments.

### EXPLANATION OF REFERENCE NUMERALS

- 13: Tread mold
- 16: Segment
- 17: End surface in the longitudinal direction
- 20: Front surface
- 21: Main frame
- 23: Sub frame
- 27: Tire tread
- 28: Ground-contacting surface
- 29: Main groove
- 30: Lateral groove
- 31: Vulcanizing mold
- 34: Discharging groove
- 35: Rear surface
- 36: Side surface
- 39: Narrow groove
- 40: Wide groove
- 45: Edge
- 46: Cut portion

## Claims

1. A vulcanizing mold having a tread mold in which a plurality of segments each having, on a front surface thereof, a molding surface for shaping a ground-contacting surface of a tire tread during vulcanization are arranged in a manner that end surfaces of the segments in the longitudinal direction abut against each other, wherein
a discharging groove that allows only gas to pass through is formed at at least one of the end surfaces of each of the segments in the longitudinal direction, one end of the discharging groove being open to the front surface, and the other end of the discharging groove being open to a side surface.

2. The vulcanizing mold according to claim 1, wherein
the other end of the discharging groove is open to a rear surface.

3. The vulcanizing mold according to claim 1 or 2, wherein,
a main frame forming, on the tire tread, a main groove extending continuously in the longitudinal direction of the tire tread is provided on the front surface of each of the segments, and the one end of the discharging groove is open at the respective sides of the main groove.

4. The vulcanizing mold according to any one of claims 1 to 3, wherein
a cross-sectional area of the discharging groove increases from one end opening toward the other end opening.

5. The vulcanizing mold according to claim 4, wherein:
a plurality of narrow grooves each having a smaller cross-sectional area are formed at one side portion of the discharging groove;
a wide groove having a larger cross-sectional area than a total cross-sectional area in which all the cross-sectional areas of the plurality of narrow grooves are summed up is formed at the other side portion of the discharging groove; and,
the other ends of the plurality of narrow grooves continue to one end of the wide groove.

6. The vulcanizing mold according to any one of claims 1-5, wherein:
the longitudinal length M of each of the segments is 400 mm or lower.

7. The vulcanizing mold according to claim 3, wherein:
in a case where a sub frame is additionally formed on the front surface of each of the segments, the sub frame extending obliquely with respect to and continuing to the main frame, and the sub frame forming a lateral groove intersecting the main frame on the tire tread, the height G of the sub frame is set at 50% or lower of the height H of the main frame.

8. The vulcanizing mold according to any one of claims 1 to 7, wherein:
the other end of the discharging groove is open at least to the rear surface, and a cut portion continuously extending in the width direction is formed at an edge formed at a position at which the rear surface of the segment intersects the end surface in the longitudinal direction where the discharging groove is formed.

9. A vulcanizing method for vulcanizing a tire tread by using a vulcanizing mold having a tread mold in which a plurality of segments each having, on a front surface thereof, a molding surface for shaping a ground-contacting surface of the tire tread are arranged in a manner that end surfaces of the segments in the longitudinal direction abut against each other, wherein a discharging groove that allows only gas to pass through is formed at at least one of the respective end surfaces of each of the segments in the longitudinal direction, one end of the discharging groove being open to the front surface, and the other end of the discharging groove being open to a side surface, so that gas existing between the tire tread and the tread mold can be discharged through the discharging groove.
